(19) Europäisches Patentamt
European Patent Office
Office européen des brevets

(11) EP 1 236 171 B1

(12) **EUROPÄISCHE PATENTSCHRIFT**

(45) Veröffentlichungstag und Bekanntmachung des Hinweises auf die Patenterteilung:
**21.04.2004 Patentblatt 2004/17**

(21) Anmeldenummer: **00977341.7**

(22) Anmeldetag: **07.12.2000**

(51) Int Cl.7: **G06K 19/07**

(86) Internationale Anmeldenummer:
**PCT/CH2000/000650**

(87) Internationale Veröffentlichungsnummer:
**WO 2001/043065 (14.06.2001 Gazette 2001/24)**

(54) **VERFAHREN ZUM BETREIBEN EINES TRANSPONDERS**

METHOD FOR OPERATING A TRANSPONDER

PROCEDE POUR FAIRE FONCTIONNER UN TRANSPONDEUR

(84) Benannte Vertragsstaaten:
**AT BE CH CY DE DK ES FI FR GB GR IE IT LI LU MC NL PT SE TR**

(30) Priorität: **07.12.1999 CH 224399**

(43) Veröffentlichungstag der Anmeldung:
**04.09.2002 Patentblatt 2002/36**

(73) Patentinhaber: **Datamars SA**
**6930 Bedano-Lugano (CH)**

(72) Erfinder:
- **STEGMAIER, Peter**
**CH-6946 Ponte Capriasca (CH)**
- **HASSAN-ZADE, Parvis**
**CH-6922 Morcote (CH)**

(74) Vertreter: **Patentanwälte Feldmann & Partner AG**
**Postfach**
**Europastrasse 17**
**8152 Glattbrugg (CH)**

(56) Entgegenhaltungen:
**EP-A- 0 682 425**
**WO-A-98/13805**
**WO-A-99/05658**

- **PATENT ABSTRACTS OF JAPAN vol. 014, no. 002 (E-868), 8. Januar 1990 (1990-01-08) & JP 01 251937 A (NEC HOME ELECTRON LTD), 6. Oktober 1989 (1989-10-06)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zum Betreiben eines Transponders gemäss Oberbegriff des ersten Patentanspruchs.

Heutzutage werden Transponder in diversen Ausführungsformen angeboten. Für verschiedene Anwendungen werden passive Transponder, auch Identifikationsanhänger oder Tags genannt, verwendet. Diese dienen der Identifikation von Objekten sowie auch der Diebstahlsicherung.

Passive Transponder zur Diebstahlsicherung werden beispielsweise an Kleidungsstücken befestigt. Solche Anhänger sind bekannt als EAS-Tags (Electronic Article Surveillance tags). Diese bestehen bspw. aus einer Spule und einer Kapazität, die zusammen einen Resonanzschwingkreis bilden. Von einer Basisstation (auch Lesegerät genannt) wird der Resonanzschwingkreis zur Schwingung angeregt und sein Antwortsignal detektiert. So kann das Vorhandensein oder das Nichtvorhandensein eines Transponders festgestellt werden; Transponder mit unterschiedlichen Resonanzfrequenzen können voneinander unterschieden werden.

Beim Verkauf werden die Transponder inaktiviert, um bei Objekten, welche die Verkaufsstelle verlassen, eine Unterscheidung zwischen "bezahlt" und "nicht bezahlt" zu ermöglichen und im letzteren Fall entsprechend zu alarmieren. Zur Inaktivierung genügt es, eine signifikante Änderung des Resonanzschwingkreises herbei zu führen. Eine solche Änderung kann bspw. darin bestehen, die Spule kurz zu schliessen oder den Resonanzkondensator zu zerstören. Auch durch Verstimmung des Resonanzschwingkreises oder durch andere irreversible Massnahmen kann der Transponder inaktiviert werden.

Es sei lediglich der Deutlichkeit halber erwähnt, dass hier grundsätzlich unterschieden werden muss zwischen Inaktivieren und Deaktivieren. Beim Inaktivieren wird der Transponder in einen Zustand gebracht, in dem er irreversibel nicht mehr funktionsfähig ist. Unter Deaktivieren wird hingegen verstanden, den Transponder reversibel von einem aktiven Status in einen Ruhestatus zu bringen, um ihn nach Wunsch wieder in den aktiven Status zu bringen.

Ferner sind Transponder bekannt, die mit einem Sender arbeiten, der in einem Lesefeld einer Basisstation aktiviert wird und Daten an die Basisstation übermittelt. Solche RF-ID (Radio Frequency IDentification) Transponder sind etwas komplexer und umfassen meist zwei Hauptelemente, nämlich einen integrierten Schaltkreis und eine Antenne. Die RF-ID Transponder lassen sich durch die Uebermittlung und Speicherung entsprechender Daten deaktivieren. Wird der deaktivierte integrierte Schaltkreis durch eine Basisstation abgefragt, so wird er keine Daten mehr an die Basisstation übermitteln.

In der Schrift JP-01 251 937 A wird ein Verfahren offenbart, welches sicherstellen soll, dass ein von einer ersten Übermitlungsstation gesendetes Signal von einer zweiten Übermitlungsstation empfangen wird. Wenn von der zweiten Übermittlungsstation ein Signal empfangen wird, so antwortet diese mit dem mehrmaligen Senden eines Bestätigungssignals an die erste Übermittlungsstation. Durch das mehrmalige Senden ist gewahrleistet, dass das Bestätigungssignal auch bei erschwerter oder gestörter Übermittlung bei der ersten Übermittlungsstation ankommt, wodurch eine sichere Kommunikation erreicht wird.

Aus der Schrift WO-99/05658 A ist ein Verfahren zum Betreiben eines RF-ID Transponders bekannt, gemäss welchem jedem zu einer Basisstation gehörigen Transponder eine eindeutige Identifikationsinformation zugeteilt wird. Diese Identifikationsinformation wird sowohl im Transponder als auch in einer von der Basisstation abrufbaren Datenbank gespeichert. Sobald nun die Basisstation einen Transponder in ihrem Wirkungsfeld feststellt, fragt sie seine Identifikationsinformation ab und vergleicht diese mit der in der Datenbank gespeicherten Information. Nur bei Übereinstimmung der Identifikationsinformationen sendet die Basisstation einen Deaktivierungsbefehl an den Transponder. Dadurch stellt die Basisstation sicher, dass sie nur diejenigen Transponder deaktiviert, welche ihr zugeteilt sind. Mit diesem Verfahren kann jedoch nicht verhindert werden, dass ein Transponder unbefugterweise deaktiviert bzw. reaktiviert wird; der Transponder akzeptiert in jedem Fall ein von der Basisstation gesendetes Befehlssignal.

Ein Problem ergibt sich z. B. sowohl bei den EAS- als auch bei den RF-ID-Transpondern, falls die verkaufte Ware mit dem inaktivierten oder deaktivierten Transponder wieder in die Verkaufsstelle zurückkommt, z. B. zwecks Umtausch. In diesem Fall müssen die Transponder wieder aktiviert werden, z. B. um den Warenfluss zu kontrollieren. Mit inaktivierten EAS-Anhängern ist dies üblicherweise nicht möglich;die beim Verkauf unumkehrbar zerstörten oder inaktivierten Resonanzschwingkreise lassen sich nicht reaktivieren.

Anders verhält es sich mit den RF-ID-Transpondern. Die meisten dieser Transponder lassen sich reaktivieren. Hierzu wird der RF-ID-Transponder in den Sendebereich des Lesegerätes gebracht und durch entsprechende Aktivierungssignale wieder in den aktiven Zustand versetzt. Problematisch ist jedoch der Umstand, dass solche RF-ID-Transponder durch jedermann jederzeit deaktiviert oder reaktiviert werden können, falls das entsprechende Befehlssignal bekannt ist. Da das Identifikationssignal von der Basisstation zum Transponder frei übermittelt wird, kann es problemlos ermittelt werden, womit jeglicher Schutz wegfällt. Die unbefugte Deaktivierung darf nicht möglich sein, weil sie Diebstähle ermöglicht. Die unbefugte Reaktivierung ist aus Gründen des Persönlichkeitsschutzes unerwünscht: Inaktivierte Transponder sollen keinesfalls unbefugt reaktiviert und zur Verfolgung der markierten Waren bzw. ihrer Besitzer herangezogen werden können.

Es ist Aufgabe der vorliegenden Erfindung ein Verfahren anzubieten, mit welchem Transponder nur von entsprechend autorisierten Basisstationen bzw. deren Betreibern zuverlässig deaktivierbar bzw. reaktivierbar sind.

Diese Aufgabe wird durch ein Verfahren mit den beanspruchten Merkmalen gemäss dem ersten Patentanspruch gelöst.

Das Verfahren stellt insbesondere sicher, dass das Deaktivierungssignal bzw. das Reaktivierungssignal vom Transponder nicht akzeptiert wird, bevor nicht die Berechtigung der Basisstation zur Deaktivierung bzw. Reaktivierung überprüft ist. Diese Überprüfung wird durch den Transponder anhand eines Zulassungssignals von der Basisstation durchgeführt.

Gemäss der Erfindung weist also der Transponder einen Datenspeicher und Mittel zur berührungslosen, insbesondere elektrischen, magnetischen oder elektromagnetischen Wechselwirkung mit einer Basisstation auf. Der Transponder wird in ein Wirkungsfeld der Basisstation gebracht und ist von der Basisstation durch die Übermittlung eines Befehlssignals deaktivierbar bzw. reaktivierbar. Vor der Deaktivierung bzw. Reaktivierung des Transponders wird die Berechtigung der Basisstation zur Deaktivierung bzw. Reaktivierung überprüft, indem von der Basisstation vor der Übermittlung des Befehlssignals ein Zulassungssignal, welches eine erste Zulassungsinformation enthält, an den Transponder übermittelt wird, das Zulassungssignal vom Transponder empfangen wird und die erste Zulassungsinformation vom Transponder mit einer zweiten, im Datenspeicher gespeicherten Zulassungsinformation zu einer Berechtigungsinformation verarbeitet wird. Auf Grund der so erhaltenen Berechtigungsinformation wird im Transponder entschieden, ob das Befehlssignal angenommen oder verworfen wird. Im ersteren Fall kann der Transponder deaktiviert bzw. reaktiviert werden.

Im Gegensatz zu den oben diskutierten, aus dem Stand der Technik bekannten Verfahren funktioniert das erfindungsgemässe Verfahren mit bloss einseitiger Übermittlung. In der einfachsten Ausführungsform sendet nur die Basisstation Signale an den Transponder, benötigt hingegen keine Antwort vom Transponder. Deshalb ist das erfindungsgemässe Verfahren besonders einfach und zuverlässig.

Als erste und zweite Zulassungsinformation wird vorzugsweise mindestens ein geheimer, nicht öffentlich zugänglicher Schlüssel verwendet. Das erfindungsgemässe Verfahren kann asymmetrische Schlüssel und entsprechende Berechnungsvorschriften verwenden. In diesem Fall ist z. B. in der Basisstation ein "öffentlicher Schlüssel" (public key) und im Transponder ein "privater Schlüssel" (private key) vorhanden.

Es kann von Vorteil sein, wenn Basisstation und Transponder im aktiven Zustand auch vor dem Austausch der Zulassungssignale bereits geschützte Daten austauschen können.

Auch wenn sich der Transponder im Lesefeld der Basisstation befindet, können Uebermittlungsstörungen auftreten. Es kann daher von Vorteil sein, wenn die Basisstation nach der Sendung des Befehlssignals, welches den Transponder in den Ruhestatus setzt, ein Kontrollsignal aussendet, welches vom nicht deaktivierten Transponder beantwortet würde, und dass die Basisstation eine Antwort darauf als Warnsignal anzeigen würde. So kann die Basisstation feststellen, ob der Transponder tatsächlich in den Ruhestatus versetzt worden ist und gegebenenfalls, wenn dies nicht geschehen ist, das Prozedere wiederholen, um den Transponder in den gewünschten Ruhestatus zu versetzen. Die Antwort des Transponders könnte in einer leicht erweiterten Realisierung aus einem Bestätigungssignal des Deaktivierungs-/Reaktivierungsbefehls bestehen.

Um möglichst wenig Fehlanzeigen zu bekommen, können Basisstation und Transponder im Dialog den Deaktivierungsvorgang ein- oder mehrmals wiederholen, und erst nach erfolgloser Wiederholung kann dann ein Warnsignal angezeigt werden.

Der Dialog zwischen Transponder und Basisstation kann auch eine Zulassungsidentifikation in beiden Richtungen durchführen. So kann beispielsweise der Transponder nach Feststellung der Berechtigung der Basisstation zur Deaktivierung/Reaktivierung mit einem analogen oder einem anderen Verfahren seine Berechtigung aufzeigen, geschützte Daten oder Ähnliches zur Abspeicherung aufzunehmen oder seine korrekte Herkunft zu beweisen (Authentizierung).

Wie oben angedeutet, wird für die Basisstation auch der Begriff "Lesegerät" oder "Leser" verwendet. Dieser Begriff ist wohl historisch berechtigt, weil früher die Transponder tatsächlich bloss abgefragt, also "gelesen" wurden. Heute erfüllen die Basisstationen, wie oben beschrieben, viele Funktionen wie bspw. Senden von Information, Empfangen von Information, Verarbeiten von Information etc.. Deshalb wird in der obigen Beschreibung der allgemeinere Begriff "Basisstation" bevorzugt. Der Einfachheit halber und ohne Einschränkung der Allgemeinheit werden aber in der nachfolgenden Figurenbeschreibung die Begriffe "Lesegerät" oder "Leser" gebraucht.

Nachfolgend wird mit Bezug auf die beiliegende Zeichnung eine Variante des erfindungsgemässen Verfahrens erläutert. Es zeigt:

Figur 1 ein Flussdiagramm, welches die Verfahrensschritte zur Deaktivierung des Transponders aufzeigt und

Figur 2 ein ebensolches Flussdiagramm, welches die Verfahrensschritte zur Reaktivierung des Transponders aufzeigt.

Grundbedingung für einen möglichen Datenaustausch zwischen Transponder und Lesegerät ist der Umstand, dass der Transponder in ein Lesefeld eines Lesegerätes gebracht wird. Dies ist im Flussdiagramm von Figur 1 durch den Kasten 1 symbolisiert. Im Lesefeld kann der Transponder mit Energie versorgt werden. In diesem Zustand können Transponder und Lesegerät bereits nicht geschützte Informationen beliebig austauschen. Dies symbolisiert das Feld 2. Ist der nicht geschützte, optionale Datenaustausch beendet, so wird im Schritt 3 die Berechtigung des Lesegeräts zur Deaktivierung des Transponders festgestellt. Wenn erwünscht, können in diesem Schritt 3 Transponder und Lesegerät auch Identifikationssignale austauschen. Stellt der Transponder die Korrektheit des Zulassungssignals beziehungsweise die Korrektheit des Informationsdialoges mit dem Lesegerät fest, so kann das Lesegerät im Schritt 5 dem Transponder den Befehl übermitteln, in den Ruhezustand zu gelangen. Dieses Set-Protected-Quiet-Mode-Signal (SPQM), welches den Transponder deaktiviert, kann vom Transponder nur akzeptiert werden, nachdem er erfolgreich die Berechtigung des Lesegerätes festgestellt hat. Konnte jedoch in Schritt 4 das Zulassungssignal des Lesegerätes vom Transponder nicht erkannt werden, so verbleibt der Transponder im aktiven Zustand 8.

Nach der Übermittlung des Set-Protected-Quiet-Mode-Signals kann das Lesegerät eine Kontrollabfrage 6 durchfürhen. Stellt das Lesegerat fest, dass der SPQM-Befehl vom Transponder nicht angenommen wurde, so verbleibt der Transponder im aktiven Zustand 8. Das Lesegerät, welches den Negativentscheid aus der Abfrage 6 erhält, kann nunmehr in eine Wiederholungsschlaufe geführt werden, worauf das vorgeschriebene Prozedere vom Schritt 3 an wiederholt wird. Diese Wiederholungsschlaufe wird unterbrochen, sobald die Abfrage 6 erfolgreich durchgeführt wurde. Das Lesegerät kann aber auch die Anzahl durchgeführter Wiederholungen zählen und nach Erreichen einer gewissen Anzahl eine Fehlermeldung F anzeigen.

Wurde jedoch das Set-Protected-Quiet-Mode-Signal korrekt empfangen, so ist der Transponder nun im deaktivierten Zustand und wird auf keinen Befehl eines Lesegerätes mehr antworten. Erst wenn eine Reaktivierung durch einen Reaktivierungsbefehl, "Reset-Protected-Quiet-Mode" (RPQM) erfolgt ist, kann der Transponder wieder in den aktiven Status zurückgeführt werden. Nach dem erfolgreichen Durchlaufen des Schrittes 9 ist die Ueberführung des Transponders in den Ruhestatus beendet.

Zur Verarbeitung der ersten Zulassungsinformation mit der zweiten Zulassungsinformation zwecks Feststellung der Berechtigung des Lesegerätes sind verschiedene an sich bekannte Verfahren anwendbar. In einer ersten beispielhaften Variante enthält die erste Zulassungsinformation einerseits eine Zufallszahl und andererseits eine mit Hilfe eines nur dem Transponder und dem Lesegerät bekannten Schlüssels aus der Zufallszahl erstellten verschlüsselten Zahl. Im Transponder wird dann durch Vergleich der Zufallszahl mit der verschlüsselten Zahl unter Verwendung desselben Schlüssels und derselben Berechnungsvorschrift die Berechtigung des Lesegerätes auf Grund eines Vorhandenseins eines identischen Schlüssels festgestellt. In einer zweiten Variante enthält die erste Zulassungsinformation einerseits eine Zufallszahl, welche für eine Synchronisation von Chiffriergeneratoren der Basisstation und des Transponders verwendbar ist, und andererseits ein mit Hilfe eines dem Transponder und dem Lesegerät bekannten Schlüssels verschlüsseltes Passwort, welches ebenfalls dem Transponder und dem Lesegerät bekannt ist. Im Transponder wird dann die Berechtigung des Lesegerätes auf Grund eines Vorhandenseins eines identischen Passwortes festgestellt. Das Passwort kann nach erfolgtem Beweis der Berechtigung des Lesegerätes vom Lesegerät im Transponder veränderbar sein. Der Schlüssel kann nach erfolgtem Beweis der Berechtigung der Basisstation von der Basisstation im Transponder veränderbar sein.

Obwohl in der Ausführung gemäss der Figur 1 Lesegerät und Transponder gemäss Schritt 2 bereits vor der Berechtigungsüberprüfung Daten austauschen, ist dies keineswegs zwingend. Selbstverständlich können, falls erwünscht, nicht geheime Daten ohne Zulassungsüberprüfung übermittelt werden, doch kann dieser Datenaustausch auch erst nach dem in der Figur mit 3 bezeichneten Schritt möglich sein, d. h. erst wenn der Transponder vom Lesegerät ein korrektes Zulassungssignal erhalten hat. Auf diese Weise findet prinzipiell ein Datenaustausch erst nach der Sicherheitsüberprüfung statt.

Die Deaktivierung erfolgt vorzugsweise permanent und vom Wirkungsfeld der Basisstation unabhängig. Zu diesem Zweck kann der Transponder mit einem nichtflüchtigen Speicher ausgestattet sein.

Das Vorgehen um den Transponder, der sich im Ruhezustand befindet, also deaktiviert ist, wieder in den aktiven Zustand zurückzuführen, ist in der Figur 2 dargestellt. Grundvoraussetzung ist selbstverständlich auch hier, dass der Transponder sich im Lesefeld eines Lesegerätes befindet. Ist diese Bedingung 11 erfüllt, findet wie unter 12 angegeben ein einseitiger Datenfluss vom Lesegerät zum Transponder statt. Hierzu sendet das Lesegerät eine erste Zulassungsinformation zum Beweis seiner Berechtigung, welche der im Lesefeld befindliche Transponder überprüft und feststellt, ob die erste Zulassungsinformation mit einer zweiten, in einem Datenspeicher des Transponders gespeicherten Zulassungsinformation übereinstimmt oder zusammenpasst. Dies kann bedeuten, dass ein in der ersten Zulassungsinformation enthaltener Code mit einem in der zweiten Zulassungsinformation enthaltenen Code übereinstimmt, dass die rechnerische Verarbeitung einer in der ersten Zulassungsinformation enthaltenen Zahl mit einer in der zweiten Zulassungsinformation enthaltenen Zahl nach einem bestimmten Algorithmus ein bestimmtes Resultat ergibt, etc. Wenn erwünscht, können in diesem Schritt 12 Transponder und Lesegerät auch Identifikationssignale austauschen.

Da bei diesem Verfahren keine Aktivität des Transponders gemäss der eingangs erwähnten Definition stattfindet sendet der Transponder keine Daten, bevor er nicht die erforderliche Berechtigung des Lesegerätes überprüft hat. Erkennt er die Berechtigung des Lesegerätes nicht an, so bleibt der Transponder deaktiviert (17).

Nach der Überprüfung 13 sendet das Lesegerät einen Befehl zur Reaktivierung des Transponders. Dieses Reset-Protected-Quiet-Mode -Signal reaktiviert den Transponder. Bedingung ist wie bereits erwähnt, dass die Überprüfung und der Austausch der Zulassungsinformationen erfolgreich durchgeführt worden ist. Nach Aussendung des RPQM-Befehls 14 überprüft in Schritt 15 das Lesegerät den korrekten Erhalt des Befehls und stellt fest, ob der Transponder nun reaktiviert ist. Ist dies nicht der Fall, bleibt der Transponder deaktiv 17 und das Verfahren ist abgeschlossen. Gegebenenfalls kann das Prozedere in einer Wiederholungsschlaufe wiederholt werden. Das heisst, dass die Schritte 12 bis 15 mehrmals durchlaufen werden. Ist jedoch die Reaktivierung durch den RPQM-Befehl 14 erfolgreich durchgeführt, können Lesegerät und Transponder beliebige Daten frei austauschen 16. Nach Abschluss des Datenaustausches ist das Ende des Verfahrens 18 erreicht.

## Patentansprüche

**1.** Verfahren zum Betreiben eines Transponders, welcher einen Datenspeicher und Mittel zur berührungslosen Wechselwirkung mit einer Basisstation aufweist,
wobei der Transponder in ein Wirkungsfeld der Basisstation gebracht wird (1) und von der Basisstation durch die Übermittlung eines Befehlssignals (5, 14) deaktivierbar (7) bzw. reaktivierbar (16) ist,
**dadurch gekennzeichnet, dass**
vor der Deaktivierung (7) bzw. Reaktivierung (16) des Transponders die Berechtigung der Basisstation zur Deaktivierung (7) bzw. Reaktivierung (16) überprüft wird (4, 13), indem
von der Basisstation vor der Übermittlung des Befehlssignals (5, 14) ein Zulassungssignal, welches eine erste Zulassungsinformation enthält, an den Transponder übermittelt wird (3, 12),
das Zulassungssignal vom Transponder empfangen wird und
die erste Zulassungsinformation vom Transponder mit einer zweiten, im Datenspeicher gespeicherten Zulassungsinformation zu einer Berechtigungsinformation verarbeitet wird, und
auf Grund der so erhaltenen Berechtigungsinformation im Transponder entschieden wird (4, 13), ob das Befehlssignal angenommen (7, 16) oder verworfen (8, 17) wird.

**2.** Verfahren nach Anspruch 1, wobei die erste Zulassungsinformation
einerseits eine Zufallszahl und
andererseits eine mit Hilfe eines nur dem Transponder und der Basisstation bekannten Schlüssels aus der Zufallszahl erstellte verschlüsselte Zahl
enthält, so dass
im Transponder durch Vergleich der Zufallszahl mit der verschlüsselten Zahl die Berechtigung der Basisstation auf Grund eines Vorhandenseins eines identischen Schlüssels feststellbar ist.

**3.** Verfahren nach Anspruch 1, wobei die erste Zulassungsinformation
einerseits eine Zufallszahl, welche für eine Synchronisation von Chiffriergeneratoren der Basisstation und des Transponders verwendbar ist, und andererseits ein mit Hilfe eines dem Transponder und der Basisstation bekannten Schlüssels verschlüsseltes Passwort, welches ebenfalls dem Transponder und der Basisstation bekannt ist,
enthält, so dass
im Transponder die Berechtigung der Basisstation auf Grund eines Vorhandenseins eines identischen Passwortes feststellbar ist.

**4.** Verfahren nach Anspruch 3, wobei das Passwort nach erfolgtem Beweis der Berechtigung der Basisstation von der Basisstation im Transponder veränderbar ist.

**5.** Verfahren nach einem der Ansprüche 2-4, wobei der Schlüssel nach erfolgtem Beweis der Berechtigung der Basisstation von der Basisstation im Transponder veranderbar ist.

**6.** Verfahren nach einem der vorangehenden Ansprüche, wobei als erste und zweite Zulassungsinformation mindestens ein geheimer, nicht öffentlich zugänglicher Schlüssel verwendet wird.

**7.** Verfahren nach einem der vorangehenden Ansprüche, wobei als erste und zweite Zulassungsinformation asymmetrische Schlüssel und entsprechende Berechnungsvorschriften verwendet werden.

**8.** Verfahren nach einem der vorangehenden Ansprüche, wobei vor der Übermittlung des Zulassungssignals (3, 12) die Basisstation und der Transponder nicht geschützte Daten austauschen (2).

**9.** Verfahren nach einem der vorangehenden Ansprüche, wobei die Basisstation nach der Sendung eines Befehlssignals (5), welches den Transponder deaktiviert (7), ein Kontrollsignal aussendet, welches vom nicht deaktivierten Transponder beantwortet würde und die Basisstation eine Antwort darauf als Warnsignal anzeigt (F)..

**10.** Verfahren nach Anspruch 9, wobei vor Anzeige des Warnsignals durch die Basisstation der Deaktivierungsvorgang einmal oder mehrmals wiederholt und erst nach erfolgloser Wiederholung das Warnsignal angezeigt wird.

**11.** Verfahren nach einem der vorangehenden Ansprüche, wobei der Transponder nach Empfang und Feststellung des korrekten Zulassungssignals mit einem davon verschiedenen Bestätigungssignal antwortet, welches von der Basisstation erkannt und bestätigt wird.

**12.** Verfahren nach einem der vorangehenden Ansprüche, wobei der Transponder nach einer Annahme des Befehlssignals deaktiviert (7) bzw. reaktiviert (16) wird.

**13.** Verfahren nach Anspruch 12, wobei die Deaktivierung permanent und vom Wirkungsfeld der Basisstation unabhängig erfolgt.

## Claims

**1.** A method for operating a transponder which comprises a data memory and means for the contact-free interaction with a base station,
wherein the transponder is brought into an active field of the base station (1) and is deactivatable (7) or reactivatable (16) by the base station by transmitting a command signal (5, 14),
**characterised in that**
before the deactivation (7) or reactivation (16) of the transponder, the authorisation of the base station for deactivation (7) or reactivation (16) is checked (4, 13) **in that**
from the base station before transmitting the command signal (5, 14) an acceptance signal which contains first acceptance information it transmitted (3, 12) to the transponder,
the acceptance signal is received by the transponder and
the first acceptance information is processed by the transponder with second acceptance information stored in the data memory, into authorisation information, and
on account of the thus obtained authorisation information it is decided in the transponder (4, 13) whether the command signal is accepted (7, 16) or rejected (8, 17).

**2.** A method according to claim 1, wherein the first acceptance information
on the one hand contains a random number and
on the other hand a coded number created from the random number with the help of a key known only to the transponder and the base station,

so that

in the transponder, by comparison of the random number with the coded number, the authorisation of the base station on account of the presence of an identical key may be ascertained.

**3.** A method according to claim 1, wherein the first acceptance information
on the one hand contains a random number which may be used for a synchronisation of coding generators of the base station and of the transponder, and on the other hand a password encoded with the help of a key known to the transponder and the base station, said password likewise being known to the transponder and the base station,
so that
in the transponder the authorisation of the base station may be ascertained on the basis of the presence of an identical password.

**4.** A method according to claim 3, wherein after an effected proof of the authorisation of the base station, the password may be changed in the transponder by the base station.

**5.** A method according to one of the claims 2-4, wherein after an effected proof of the authorisation of the base station, the key may be changed in the transponder by the base station.

**6.** A method according to one of the preceding claims, wherein at least one secret key not publicly accessible is used as first and second acceptance information.

**7.** A method according to one of the preceding claims, wherein asymmetric keys and corresponding authorisation regulations are used as first and second acceptance information.

**8.** A method according to one of the preceding claims, wherein before transmitting the acceptance signal (8, 12) the base station and the transponder exchange (2) non-protected data.

**9.** A method according to one of the preceding claims, wherein the base station after sending a command signal (5) which deactivates (7) the transponder, emits a control signal which would be responded to by the non-deactivated transponder, and the base station displays (F) a response to this as a warning signal.

**10.** A method according to claim 9, wherein before the display of the warning signal by the base station, the deactivation procedure is repeated once or several times and only after an unsuccessful repetition is the warning signal displayed.

**11.** A method according to one of the preceding claims, wherein the transponder after receipt and verifying the correct acceptance signal responds with a verification signal differing from this, which is recognised and verified by the base station.

**12.** A method according to one of the preceding claims, wherein the transponder after accepting the command signal is deactivated (7) or reactivated (16).

**13.** A method according to claim 12, wherein the deactivation is effected permanently and independently of the active field of the base station.

## Revendications

**1.** Procédé pour faire fonctionner un transpondeur, qui présente une mémoire de données et des moyens pour l'interaction sans contact avec une station de base, moyennant quoi le transpondeur est amené (1) dans un champ d'action de la station de base et qu'il peut être désactivé ou réactivé (16) par la station de base grâce à la transmission d'un signal d'instruction (5, 14), **caractérisé en ce que**, avant la désactivation (7) ou la réactivation (16) du transpondeur l'authentification ou l'habilitation de la station de base pour la désactivation (7) ou la réactivation (16) est contrôlée (4, 13), grâce au fait que,

avant la transmission du signal d'instruction (5, 14) un signal d'autorisation contenant une première information d'autorisation est transmis au transpondeur (3, 12) par la station de base,

le signal d'autorisation est reçu par le transpondeur et

la première information d'autorisation est transformée en information d'authentification ou d'habilitation par le transpondeur avec une seconde information d'autorisation, enregistrée dans la mémoire de données et que sur la base de l'information d'authentification ou d'habilitation ainsi obtenue il soit décidé dans le transpondeur (4, 13) d'accepter (7, 16) ou de refuser (8, 17) le signal d'instruction.

**2.** Procédé selon la revendication 1, dans lequel la première information d'autorisation contient

d'une part un nombre aléatoire et

d'autre part un nombre codé à partir du nombre aléatoire et établi à l'aide d'une clé connue seuls du transpondeur et de la station de base de telle sorte que,

dans le transpondeur, l'authentification de la station de base peut être effectuée sur la base de la présence d'une clé identique en comparant le nombre aléatoire avec le nombre codé.

**3.** Procédé selon la revendication 1, dans lequel la première information d'autorisation contient

d'une part un nombre aléatoire, lequel peut être utilisé pour une synchronisation de générateurs de chiffrement de la station de base et du transpondeur et d'autre part un mot de passe codé à l'aide d'une clé connue du transpondeur et de la station de base, mot de passe qui est également connu du transpondeur et de la station de base, de telle sorte que,

dans le transpondeur, l'authentification de la station de base s'effectue sur la base de la présence d'un mot de passe identique.

**4.** Procédé selon la revendication 3, dans lequel le mot de passe peut être modifié par la station de base dans le transpondeur après la preuve réussie de l'authentification de la station de base.

**5.** Procédé selon l'une des revendications 2 à 4, dans lequel la clé peut être modifiée par la station de base dans le transpondeur après la preuve réussie de l'authentification de la station de base.

**6.** Procédé selon l'une quelconque des revendications précédentes, dans lequel au moins une clé secrète, non accessible au public, est utilisée comme première et seconde information d'autorisation.

**7.** Procédé selon l'une quelconque des revendications précédentes, dans lequel des clés asymétriques et des prescriptions de calcul correspondantes sont utilisées comme première et seconde information d'autorisation.

**8.** Procédé selon l'une quelconque des revendications précédentes, dans lequel, avant la transmission du signal d'autorisation (3, 12) la station de base et le transpondeur échangent (2) des données non protégées.

**9.** Procédé selon l'une quelconque des revendications précédentes, dans lequel la station de base, après l'émission d'un signal d'instruction (5) qui désactive (7) le transpondeur, émet un signal de contrôle, auquel répondrait le transpondeur non désactivé et dans lequel la station y affiche une réponsé comme signal d'avertissement (F).

**10.** Procédé selon la revendication 9, dans lequel avant l'affichage du signal d'avertissement par la station de base le processus de désactivation est répété une fois ou plusieurs fois et le signal d'avertissement est affiché seulement après la répétition sans succès.

**11.** Procédé selon l'une quelconque des revendications précédentes, dans lequel le transpondeur répond après la réception et la constatation du signal d'autorisation correct par un signal de confirmation différent du signal d'autorisation, signal de confirmation qui est reconnu et confirmé par la station de base.

**12.** Procédé selon l'une quelconque des revendications précédentes, dans lequel le transpondeur est désactivé (7) ou réactivé (16) après la réception du signal d'instruction.

**13.** Procédé selon la revendication 12, dans lequel la désactivation s'effectue de façon permanente et indépendamment du champ d'action de la station de base.

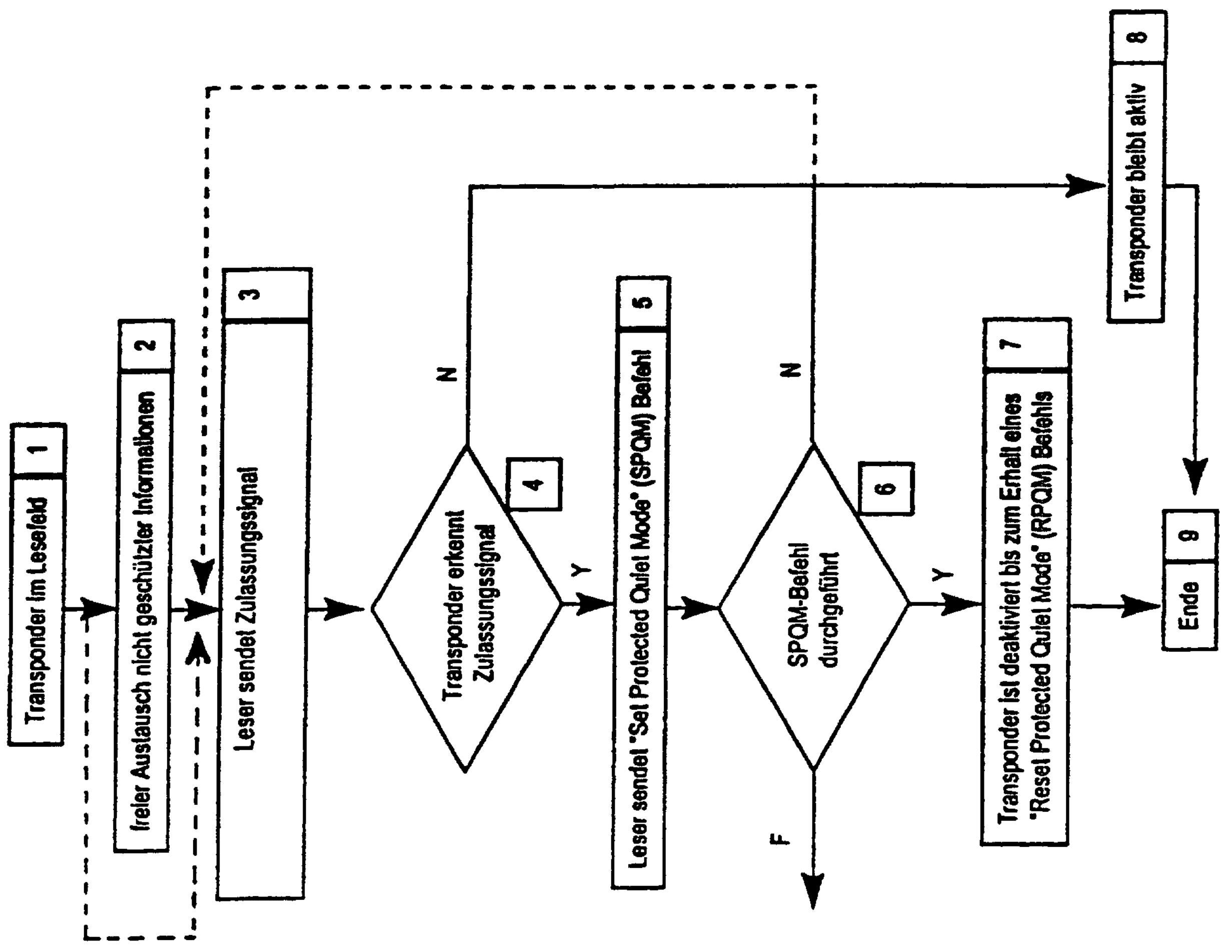
Transponder im Lesefeld
1
freier Austausch nicht geschützter Informationen
2
Leser sendet Zulassungssignal
3
Transponder erkennt Zulassungssignal
4
N
Y
Leser sendet "Set Protected Quiet Mode" (SPQM) Befehl
5
SPQM-Befehl durchgeführt
6
N
Y
F
Transponder ist deaktiviert bis zum Erhalt eines "Reset Protected Quiet Mode" (RPQM) Befehls
7
Transponder bleibt aktiv
8
Ende
9

FIG. 1

FIG. 2

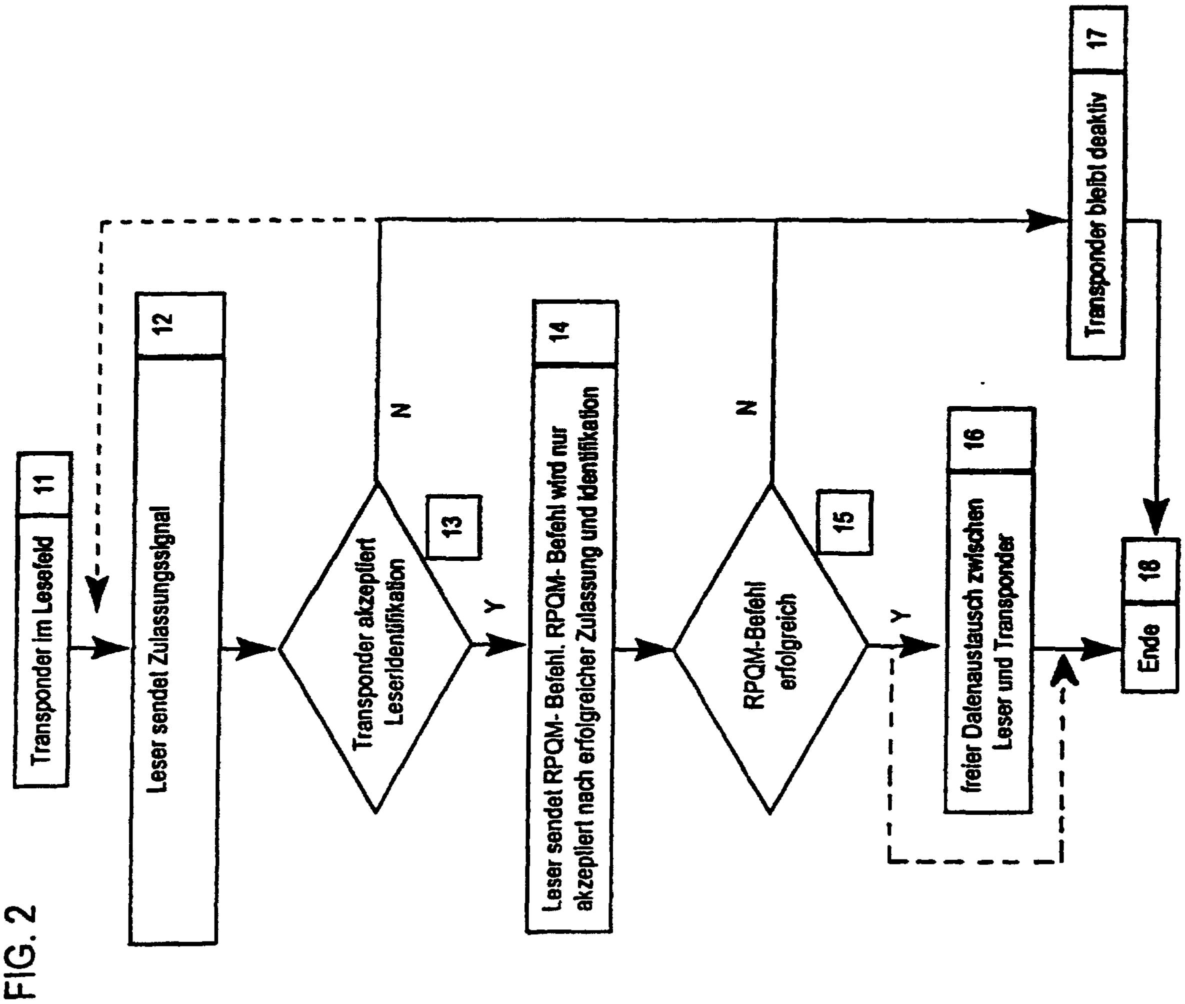
Transponder im Lesefeld
11
Leser sendet Zulassungssignal
12
Transponder akzeptiert Leseridentifikation
13
Y
N
Leser sendet RPQM- Befehl. RPQM- Befehl wird nur akzeptiert nach erfolgreicher Zulassung und Identifikation
14
RPQM-Befehl erfolgreich
15
Y
N
freier Datenaustausch zwischen Leser und Transponder
16
Transponder bleibt deaktiv
17
Ende
18